# EUROPÄISCHE PATENTSCHRIFT

(11) **EP 3 610 547 B1**
(45) Veröffentlichungstag und Bekanntmachung des Hinweises auf die Patenterteilung: **19.08.2020**
(21) Anmeldenummer: 18715012.3
(22) Anmeldetag: 29.03.2018
(51) Int. Cl.: H02J 3/34, F03B 15/00, H02P 9/10, H02J 3/38

(54) **VERFAHREN ZUM BETRIEB EINER WASSERKRAFTANLAGE ZUR REGELUNG DER NETZFREQUENZ**
METHOD OF OPERATION OF A HYDROELECTRIC POWER PLANT FOR REGULATING NETWORK FREQUENCY
PROCÉDÉ DE FONCTIONNEMENT D'UNE INSTALLATION HYDROÉLECTRIQUE POUR LA RÉGULATION DE LA FRÉQUENCE DU RÉSEAU

(30) Priorität: 13.04.2017 DE 102017107992
(43) Veröffentlichungstag der Anmeldung: 19.02.2020
(73) Patentinhaber: Voith Patent GmbH, 89522 Heidenheim (DE)
(72) Erfinder: FOITZIK, Thomas, 73491 Neuler (DE); BRUNS, Martin, 89518 Heidenheim (DE)
(74) Vertreter: Voith Patent GmbH - Patentabteilung
(86) Internationale Anmeldenummer: PCT/EP2018/058114
(87) Internationale Veröffentlichungsnummer: WO 2018/188964

(56) Entgegenhaltungen:
- EP-A2- 2 270 331
- EP-A2- 2 369 169
- DE-A1- 2 421 409
- DE-A1-102011 015 336

## Beschreibung

Die vorliegende Erfindung betrifft eine Wasserkraftanlage, welche zur schnellen Regelung der Netzfrequenz geeignet ist, und ein Verfahren zum Betrieb einer solchen Wasserkraftanlage.

Die EP 2 369 169 A2 offenbart eine Wasserkraftanlage, umfassend ein Oberwasserbecken und ein Unterwasserbecken, wobei der Wasserspiegel im Oberwasserbecken über dem Wasserspiegel des Unterwasserbeckens liegt, einen Wasserweg, der das Oberwasserbecken mit dem Unterwasserbecken verbindet, eine Turbine, welche im Wasserweg angeordnet ist, eine elektrische Synchronmaschine, welche mit der Turbine mechanisch verbunden ist, einen Frequenzumrichter, welcher mit der Synchronmaschine elektrisch verbunden ist, einen Netz-Transformator, welcher mit dem Frequenzumrichter und dem Stromnetz elektrisch verbunden ist, und einen Widerstand, welcher im Gleichstromzwischenkreis des Frequenzumrichters so angeordnet ist, dass er die Stränge des Gleichstromzwischenkreises miteinander verbinden kann.

Klassische Wasserkraftanlagen können aufgrund der Trägheit der Wassersäule, sowie des maximalen und minimalen zulässigen Wasserdruckes in den Wasserwegen und in der Turbine, die elektrische Leistung nur verhältnismäßig langsam regeln - typischerweise auf einer Zeitskala von 10 - 30 Sekunden. Dies reicht nicht aus um bei den gestiegenen Anforderungen einen Beitrag zur kurzzeitigen Regelung der Netzfrequenz leisten zu können. So fordert beispielsweise der National Grid Code von Großbritannien, dass eine bestimmte elektrische Leistung in Abhängigkeit von der Netzfrequenz in weniger als einer Sekunde ins Netz einzuprägen bzw. zu absorbieren ist, um an der entsprechenden Vergütung zu partizipieren. Es ist Aufgabe der vorliegenden Erfindung eine Wasserkraftanlage anzugeben, die Regelleistung auf einer Zeitskala von unter einer Sekunde bereitstellen kann. Ferner ist es Aufgabe der vorliegenden Erfindung, ein Verfahren zum Betrieb einer solchen Wasserkraftanlage anzugeben.

Die Erfinder haben erkannt, dass die gestellte Aufgabe durch ein Verfahren zum Betrieb einer Wasserkraftanlage mit den Merkmalen des Anspruchs 1 gelöst werden kann. Vorteilhafte Ausführungsformen ergeben sich aus abhängigen Verfahrensansprüchen.

Die erfindungsgemäße Lösung wird nachfolgend anhand von Figuren erläutert. Darin ist im Einzelnen folgendes dargestellt:
- Figur 1: Wasserkraftanlage;
- Figur 2: Ablaufdiagramm des erfindungsgemäßen Verfahrens zum Betrieb einer Wasserkraftanlage.

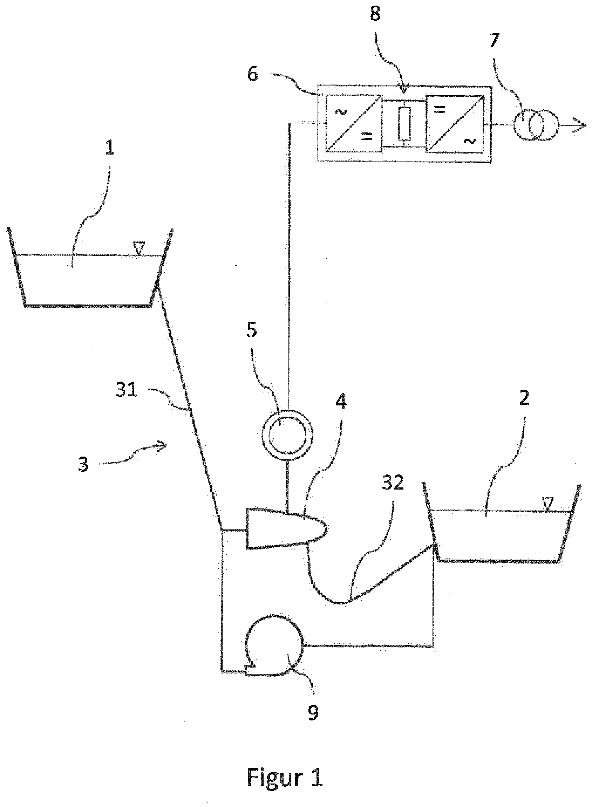

Figur 1 zeigt den schematischen Aufbau einer Wasserkraftanlage. Die Wasserkraftanlage umfasst ein Oberwasserbecken, welches mit 1 bezeichnet ist, und ein Unterwasserbecken, welches mit 2 bezeichnet ist, wobei der Wasserspiegel im Oberwasserbecken 1 über dem Wasserspiegel des Unterwasserbeckens 2 liegt. Bei den Becken 1 und 2 kann es sich auch um natürliche Gewässer wie beispielsweise Seen oder Flüsse handeln. Die Wasserkraftanlage umfasst ferner einen Wasserweg, welcher mit 3 bezeichnet ist und das Oberwasserbecken 1 mit dem Unterwasserbecken 2 verbindet. Im Wasserweg 3 ist eine Turbine angeordnet, welche mit 4 bezeichnet ist. Dadurch wird der Wasserweg 3 in zwei Teilstücke geteilt. Der oberhalb der Turbine 4 gelegene Teil - die Druckrohrleitung - ist mit 31 bezeichnet, und der unterhalb der Turbine gelegene Teil - das Saugrohr - ist mit 32 bezeichnet. Die Turbine 4 verfügt über ein Turbinenlaufrad, einen Leitapparat und eine Einrichtung zum Ausblasen des Raumes um das Turbinenlaufrades, so dass im ausgeblasenen Zustand das Turbinenlaufrad in Luft rotieren kann, wobei der geschlossene Leitapparat ein Entweichen der Luft in Richtung Oberwasser verhindert. Die Turbine kann optional noch über weitere Schließorgane neben dem Leitapparat verfügen, wie z.B. einen Kugelschieber. Die Turbine 4 ist an eine elektrische Synchronmaschine gekoppelt, welche mit 5 bezeichnet ist. Die elektrische Synchronmaschine 5 ist elektrisch mit einem Frequenzumrichter verbunden, welcher mit 6 bezeichnet ist. Der Frequenzumrichter 6 ist mittels eines NetzTransformators, welcher mit 7 bezeichnet ist, mit dem Stromnetz verbunden. Der Frequenzumrichter 6 kann gegebenenfalls über geeignete Schalter und Leitungen aus der elektrischen Leitung zwischen Synchronmaschine 5 und dem Netz-Transformator 7 herausgenommen werden, so dass die Synchronmaschine 5 direkt über den Netz-Transformator 7 am Netz angeschlossen ist. Dadurch kann in bestimmten Betriebszuständen (s.u.) die Verlustleistung des Frequenzumrichters 6 eingespart werden. In Figur 1 sind diese Schalter und Leitungen nicht dargestellt. Im Gleichstromzwischenkreis des Frequenzumrichters 6 befindet sich ein Widerstand, welcher so geschaltet werden kann, dass er die Stränge des Gleichstromzwischenkreises miteinander verbindet. Der Widerstand ist mit 8 bezeichnet. Ferner umfasst die Wasserkraftanlage optional wenigstens eine Pumpe, welche mit 9 bezeichnet und so angeordnet ist, dass sie Wasser aus dem Unterwasserbecken 2 in das Oberwasserbecken 1 fördern kann. Die Pumpe 9 kann eigene Schließorgane umfassen und besitzt einen eigenständigen Antrieb mit Netzanschluss.

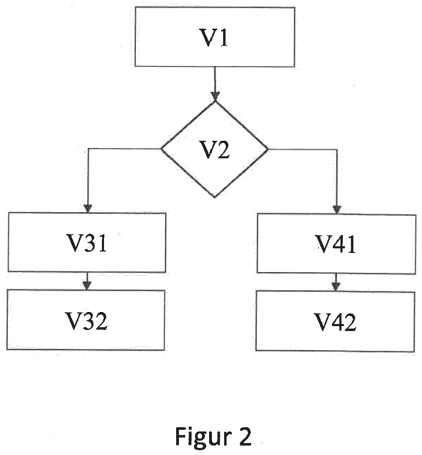

Figur 2 zeigt schematisch den Ablauf des erfindungsgemäßen Verfahrens zum Betrieb einer Wasserkraftanlage. Im Schritt, der mit V1 bezeichnet ist, befindet sich die Wasserkraftanlage in folgendem Zustand: Das Laufrad der Turbine 4 ist ausgeblasen, so dass sich dasselbe in Luft drehen kann. Die Synchronmaschine 5 läuft im sogenannten Phasenschieber-Betrieb, d.h. der Läufer derselben dreht sich gemäß der Netzfrequenz (d.h. mit Nenndrehzahl) und je nach Erregungszustand kann Blindleistung kapazitiv oder induktiv ans Netz abgegeben werden. Durch die Kopplung von Synchronmaschine 5 und Turbine 4 dreht sich das Laufrad der Turbine 4 mit derselben Rötationsgeschwindigkeit wie der Läufer der Synchronmaschine 5. In diesem Betriebszustand kann der Frequenzumrichter 6 aus der Verbindung zwischen Synchronmaschine 5 und Netz-Transformator 7 herausgeschaltet sein. Im Schritt, der mit V2 bezeichnet ist, ergeht an die Wasserkraftanlage die Aufforderung, schnelle Regelleistung aktiv zur Verfügung zu stellen. Die Aufforderung kann dahin gehen, Leistung schnell ans Netz abzugeben oder Leistung schnell vom Netz aufzunehmen. Im ersten Fall werden die Schritte des linken Astes des Ablaufdiagramms durchlaufen, im zweiten Fall die Schritte des rechten Astes.

Leistungsabgabe an das Netz: Im mit V31 bezeichneten Schritt wird der Frequenzumrichter 6 ggf. zugeschaltet und bremst die Synchronmaschine 5 und die verbundene Turbine 4 ab. Dabei wird die im Drehimpuls der rotierenden Komponenten gespeicherte Energie vom Frequenzumrichter 6 absorbiert und an das Netz abgegeben. Die in Schritt V31 ablaufenden Vorgänge sind sehr schnell und daher kann unterhalb von einer Sekunde die angeforderte Leistung ans Netz abgeben werden. Im mit V32 bezeichneten Schritt wird der Leitapparat und ggf. weitere Schließorgane der Turbine 4 geöffnet. Dadurch kann Wasser in den zuvor ausgeblasenen Bereich um das Laufrad der Turbine 4 vom Oberwasser 1 her gelangen. Die Luft wird in Richtung Unterwasser 2 ausgetrieben. Durch den Wasserfluss wird die Turbine 4 und die Synchronmaschine 5 wieder auf Nenndrehzahl beschleunigt und so kann dauerhaft Leistung ans Netz abgegeben werden. Die Vorgänge von Schritt V32 werden simultan mit den Vorgängen von Schritt V31 initiiert. Da die Vorgänge von Schritt V32 jedoch viel langsamer ablaufen als die Vorgänge von Schritt V31, kommen diese erst viel später zum Tragen - in der Regel erst nach ca. 15-20 Sekunden. Davor wird die Leistungsabgabe an das Netz durch die Vorgänge von Schritt V31 bestimmt. Im Schritt V31 wird die Leistungsabgabe an das Netz durch den Frequenzumrichter 6 geregelt und im Schritt V32 durch den Regler der Turbine 4 mit Hilfe des Leitapparats. In Schritt V32 kann ggf. der Frequenzumrichter 6 aus der elektrischen Verbindung zwischen Synchronmaschine 5 und Netz-Transformator 7 herausgeschaltet werden, sobald die Leistungsabgabe an das Netz komplett im durch den Leitapparat geregelten Turbinenbetrieb erfolgt.

Leistungsaufnahme vom Netz: Im mit V41 bezeichneten Schritt wird der Frequenzumrichter 6 ggf. zugeschaltet und zieht Leistung aus dem Netz. Diese Leistung wird mit Hilfe des Widerstandes 8 in Wärme umgewandelt. Dazu muss der Widerstand 8 gekühlt werden. Es ist von Vorteil, wenn ein Teil der Leistung, die der Frequenzumrichter 6 aus dem Netz zieht, dazu verwendet wird, um die Synchronmaschine 5 und das Laufrad der Turbine 4 zu beschleunigen. So muss weniger Energie im Widerstand 8 in Wärme umgewandelt werden. Die in Schritt V41 ablaufenden Vorgänge sind sehr schnell und daher kann unterhalb von einer Sekunde die angeforderte Leistung aus dem Netz absorbiert werden. Im Prinzip kann mit den in Schritt V41 beschriebenen Vorgängen allein auch über einen längeren Zeitraum Leistung aus dem Netz aufgenommen werden. Allerdings wird dabei ständig Energie in Wärme umgewandelt und somit sozusagen vernichtet. Es ist daher von Vorteil, wenn die Energie in V41 nur kurzzeitig in Wärme umgewandelt wird. Dazu wird im optionalen Schritt, welcher mit V42 bezeichnet ist, die optionale Pumpe 9 hochgefahren, um Wasser aus dem Unterwasserbecken 2 ins Oberwasserbecken 1 zu pumpen. Dadurch wird weiter Leistung aus dem Netz absorbiert, und die so von der Pumpe 9 aufgenommene Energie wird in Lageenergie des Wassers umgewandelt und zur späteren Verwendung im Turbinenbetrieb gespeichert. Die Vorgänge von Schritt V42 werden dabei simultan mit den Vorgängen von Schritt V41 initiiert. Da die Vorgänge von Schritt V42 jedoch viel langsamer ablaufen als die Vorgänge von Schritt V41, kommen diese erst viel später zum Tragen - in der Regel erst nach ca. 10 bis 15 Sekunden. Davor wird die Leistungsaufnahme aus dem Netz durch die Vorgänge von Schritt V41 bestimmt. Im Schritt V41 wird die Leistungsaufnahme aus dem Netz durch den Frequenzumrichter 6 geregelt. Im Schritt V42 kann die Leistungsaufnahme aus dem Netz auf zweierlei Weise geregelt werden: Entweder verfügt die Pumpe 9 über einen drehzahlvariablen Antrieb, der dadurch die von der Pumpe 9 aufgenommene Leistung regeln kann, oder die Pumpe 9 ist als Pumpe mit konstanter Drehzahl ausgebildet. Im letzteren Fall übernimmt der Leitapparat der Turbine 5 die Regelung der aus dem Netz aufgenommen Leistung. Dazu wird der Leitapparat und ggf. weitere Schließorgane der Turbine 4 geöffnet und die Turbine im geregelten Turbinenbetrieb gefahren. Dabei produziert die Synchronmaschine 5 eine entsprechende elektrische Leistung, die ins Netz eingespeist wird. Es ergibt sich eine Situation, die unter dem Namen hydraulischer Kurzschluss bekannt ist. Die aus dem Netz aufgenommen Netto-Leistung ergibt sich dann aus der Pumpenleistung minus der von der Synchronmaschine 5 produzierten Leistung. Es ist dabei klar, dass die von der Synchronmaschine 5 erzeugte Leistung dabei geringer sein muss als die Pumpenleistung. Da die Turbinenleistung und damit die von der Synchronmaschine 5 erzeugte Leistung durch den Leitapparat der Turbine 4 geregelt werden kann, kann somit auch die Netto-Leistungsaufnahme aus dem Netz geregelt werden. In Schritt V42 kann ggf. der Frequenzumrichter 6 aus der elektrischen Verbindung zwischen Synchronmaschine 5 und Netz-Transformator 7 herausgeschaltet werden, sobald die Leistungsaufnahme aus dem Netz komplett durch den wie gerade dargelegten geregelten Pumpenbetrieb erfolgt.

Nach Abarbeitung der im Schritt V2 ergangenen Aufforderung zur Bereitstellung von schneller Regelleistung, wird die Wasserkraftanlage wieder in den unter Schritt V1 beschriebenen Betriebszustand versetzt. Dann ist die Wasserkraftanlage wieder bereit eine weitere Aufforderung zu bedienen.

Die konkrete Auslegung einer erfindungsgemäßen Wasserkraftanlage hat ergeben, dass es vorteilhaft ist, wenn im Schritt V31 die Synchronmaschine 5 auf bis zu 50% der Nenndrehzahl abgebremst wird. Ebenso ist es vorteilhaft, wenn im Schritt V41 die Synchronmaschine 5 auf bis zu 120% der Nenndrehzahl beschleunigt wird. Der Frequenzumrichter 6 kann als sogenannter "Voltage Source Inverter" (VSI) ausgebildet sein. Der VSI hat den Vorteil, dass er eine Leistungsfaktor-Regelung und eine Regelung im sogenannten "Low Voltage Ride Through" ermöglicht. Der Frequenzumrichter 6 kann auch als sogenannter "Load commutated Inverter" (LCI) ausgebildet sein. Ein solcher zeichnet sich durch geringe Gestehungskosten aus.

Damit die vom Grid Code geforderte Regelleistung durch die Wasserkraftanlage optimal zur Verfügung gestellt werden kann, muss die Anlage so ausgelegt sein, dass die Kapazität zur Leistungsabgabe an das Netz der Kapazität der Leistungsaufnahme aus dem Netz entspricht. Diese Anforderung muss sowohl im Kurzzeitbereich als auch im Langzeitbereich erfüllt sein. Die erfindungsgemäße Wasserkraftanlage ist durch ihren Aufbau so flexibel, dass diese Anforderung durch eine entsprechende Auslegung der Komponenten erfüllt werden kann.

## Patentansprüche

1. Verfahren zum Betrieb einer Wasserkraftanlage mit einem Oberwasserbecken (1), einem Unterwasserbecken (2), wobei der Wasserspiegel im Oberwasserbecken (1) über dem Wasserspiegel des Unterwasserbeckens (2) liegt, einem Wasserweg (3), der das Oberwasserbecken (1) mit dem Unterwasserbecken (2) verbindet, einer Turbine (4), welche im Wasserweg (3) angeordnet ist und ein Laufrad umfasst, einer elektrische Synchronmaschine (5), welche mit der Turbine (4) mechanisch verbunden ist, einem Frequenzumrichter (6), welcher mit der Synchronmaschine elektrisch verbunden ist, einem Netz-Transformator (7) welcher mit dem Frequenzumrichter (6) und dem Stromnetz elektrisch verbunden ist, und einem Widerstand (8) welcher im Gleichstromzwischenkreis des Frequenzumrichters (6) so angeordnet ist, dass er die Stränge des Gleichstromzwischenkreises miteinander verbinden kann, **dadurch gekennzeichnet, dass** die Turbine einen Leitapparat und eine Einrichtung zum Ausblasen des Laufradraumes umfasst und die Wasserkraftanlage eine Einrichtung zur Kühlung des Widerstandes (8) umfasst,
umfassend die folgenden Schritte:
V1: Das Laufrad der Turbine (4) ist ausgeblasen und die Synchronmaschine (5) läuft im Phasenschieber-Betrieb;
V2: Empfang einer Aufforderung an die Wasserkraftanlage, schnelle Regelleistung zur Verfügung zu stellen;
Bei Aufforderung zur Leistungsabgabe:
V31: Bremsen der Synchronmaschine (5) durch den Frequenzumrichter (6);
V32: Öffnen der Leitschaufeln der Turbine (4) und Start des geregelten Turbinenbetriebs;
Bei Aufforderung zur Leistungsaufnahme:
V41: Aufnahme von Energie aus dem Netz durch den Frequenzumrichter (6) und Umwandlung der Energie in Wärme durch den Widerstand (8).

2. Verfahren nach Anspruch 1, wobei die Wasserkraftanlage eine Pumpe (9) umfasst, welche so angeordnet ist, dass sie Wasser aus dem Unterwasserbecken (2) in das Oberwasserbecken (1) fördern kann, wobei die Pumpe (9) einen eigenständigen Antrieb umfasst, und wobei das Verfahren bei Aufforderung zur Leistungsaufnahme den folgenden zusätzlichen Schritt umfasst:
V42: Anfahren der Pumpe (9) und Start des geregelten Pumpenbetriebs.

3. Verfahren nach einem der Ansprüche 1 oder 2, wobei die Wasserkraftanlage Schalter und Leitungen umfasst, die so angeordnet sind, dass die Synchronmaschine (5) in einem ersten Schaltzustand direkt mit dem Netz-Transformator (7) verbunden und in einem zweiten Schaltzustand über den Frequenzumrichter (6) mit dem Netz-Transformator (7) verbunden ist, und sich die Wasserkraftanlage in den folgenden Schritten im ersten Schaltzustand befindet: V1, V2, V32 im Zustand des geregelten Turbinenbetriebs, V42 im Zustand des geregelten Pumpenbetriebs; und sich die Wasserkraftanlage in den Schritten V31 und V41 im zweiten Schaltzustand befindet.

4. Verfahren nach einem der Ansprüche 1 bis 3, wobei die Synchronmaschine (5) im Schritt V41 durch den Frequenzumrichter (6) beschleunigt wird.

5. Verfahren nach einem der Ansprüche 1 bis 4, wobei die Synchronmaschine (5) im Schritt V31 auf 50% der Nenndrehzahl abgebremst wird.

6. Verfahren nach einem der Ansprüche 1, 2, 3 oder 5 in Verbindung mit Anspruch 4, wobei die Synchronmaschine (5) im Schritt V41 auf 120% der Nenndrehzahl beschleunigt wird.

7. Verfahren nach einem der Ansprüche 3 bis 6 in Verbindung mit Anspruch 2, wobei die Pumpe (9) einen drehzahlvariablen Antrieb umfasst, und der geregelte Pumpenbetrieb in Schritt V42 durch den drehzahlvariablen Pumpenantrieb geregelt wird.

8. Verfahren nach einem der Ansprüche 3 bis 6 in Verbindung mit Anspruch 2, wobei die Pumpe (9) einen Antrieb mit konstanter Drehzahl umfasst, und im Schritt V42 der Leitapparat der Turbine (4) geöffnet wird und der geregelte Pumpenbetrieb in Schritt V42 durch den Leitapparat der Turbine (4) geregelt wird, wobei sich die Turbine (4) und die Pumpe (9) im hydraulischen Kurzschluss befinden.

## Claims

1. Method for operating a hydroelectric power plant having an upper water tank (1), a lower water tank (2), wherein the water level in the upper water tank (1) is above the water level of the lower water tank (2), a waterway (3) that connects the upper water tank (1) to the lower water tank (2), a turbine (4) that is arranged in the waterway (3) and comprises an impeller, a synchronous electrical machine (5) that is mechanically connected to the turbine (4), a frequency converter (6) that is electrically connected to the synchronous machine, a grid transformer (7) that is electrically connected to the frequency converter (6) and the power grid, and a resistor (8) that is arranged in the DC current intermediate circuit of the frequency converter (6) such that it is able to connect the strands of the DC current intermediate circuit to one another, **characterized in that** the turbine comprises a guide apparatus and a device for exhausting the impeller space, and the hydroelectric power plant has a device for cooling the resistor (8),
comprising the following steps:
V1: The impeller of the turbine (4) is exhausted and the synchronous machine (5) operates in phase-shifter operation;
V2: Receiving a request to the hydroelectric power plant to provide rapid control power;
In the case of a request to output power:
V31: Braking the synchronous machine (5) using the frequency converter (6);
V32: Opening the guide vanes of the turbine (4) and starting controlled turbine operation;
In the case of a request to consume power:
V41: Consuming energy from the grid using the frequency converter (6) and converting the energy into heat using the resistor (8).

2. Method according to Claim 1, wherein the hydroelectric power plant comprises a pump (9) that is arranged such that it is able to convey water from the lower water tank (2) to the upper water tank (1), wherein the pump (9) comprises a standalone drive, and wherein the method, in the case of a request to consume power, comprises the following additional step:
V42: Starting up the pump (9) and starting controlled pump operation.

3. Method according to either of Claims 1 and 2, wherein the hydroelectric power plant comprises switches and lines that are arranged such that the synchronous machine (5) is connected directly to the grid transformer (7) in a first switching state and is connected to the grid transformer (7) via the frequency converter (6) in a second switching state, and the hydroelectric power plant is in the first switching state in the following steps: V1, V2, V32 in the state of controlled turbine operation, V42 in the state of controlled pump operation; and the hydroelectric power plant is in the second switching state in steps V31 and V41.

4. Method according to one of Claims 1 to 3, wherein the synchronous machine (5) is accelerated by the frequency converter (6) in step V41.

5. Method according to one of Claims 1 to 4, wherein the synchronous machine (5) is braked to 50% of the nominal rotational speed in step V31.

6. Method according to one of Claims 1, 2, 3 or 5 in connection with Claim 4, wherein the synchronous machine (5) is accelerated to 120% of the nominal rotational speed in step V41.

7. Method according to one of Claims 3 to 6 in connection with Claim 2, wherein the pump (9) comprises a drive with variable rotational speed, and the controlled pump operation is controlled by the pump drive with variable rotational speed in step V42.

8. Method according to one of Claims 3 to 6 in connection with Claim 2, wherein the pump (9) comprises a drive with constant rotational speed, and the guide apparatus of the turbine (4) is opened in step V42 and the controlled pump operation is controlled by the guide apparatus of the turbine (4) in step V42, wherein the turbine (4) and the pump (9) are hydraulically short-circuited.

## Revendications

1. Procédé d'exploitation d'une installation hydroélectrique, comprenant un réservoir d'eau amont (1), un réservoir d'eau aval (2), le niveau de l'eau dans le réservoir d'eau amont (1) étant situé au-dessus du niveau de l'eau du réservoir d'eau aval (2), une voie d'eau (3) qui relie le réservoir d'eau amont (1) au réservoir d'eau aval (2), une turbine (4) qui est disposée dans la voie d'eau (3) et comprend une roue mobile, une machine synchrone électrique (5) qui est reliée mécaniquement à la turbine (4), un convertisseur de fréquence (6) qui est relié électriquement à la machine synchrone, un transformateur de réseau (7) qui est relié électriquement au convertisseur de fréquence (6) et au réseau électrique, et une résistance (8) qui est disposée dans le circuit intermédiaire de courant continu du convertisseur de fréquence (6) de telle sorte qu'elle peut relier les unes aux autres les phases du circuit intermédiaire de courant continu, **caractérisé en ce que** la turbine comprend un dispositif directeur et un dispositif pour purger la chambre de roue libre, et l'installation hydroélectrique comprend un dispositif pour refroidir la résistance (8),
comprenant les étapes suivantes consistant à :
V1 : purger la roue libre de la turbine (4) et faire tourner la machine synchrone (5) en mode déphaseur ;
V2 : recevoir une demande adressée à l'installation hydroélectrique de fournir une capacité d'équilibrage rapide ;
en cas de demande de production de puissance :
V31 : freiner la machine synchrone (5) par le convertisseur de fréquence (6) ;
V32 : ouvrir les pales fixes de la turbine (4) et démarrer le fonctionnement régulé de la turbine ;
en cas de demande de consommation de puissance :
V41 : consommer de l'énergie du réseau par le convertisseur de fréquence (6) et convertir l'énergie en énergie par la résistance (8).

2. Procédé selon la revendication 1, dans lequel l'installation hydroélectrique comprend une pompe (9) qui est disposée de telle sorte qu'elle peut refouler de l'eau du réservoir d'eau aval (2) dans le réservoir d'eau amont (1), la pompe (9) comprenant un entraînement autonome, et le procédé comprenant, en cas de demande de consommation d'énergie, l'étape supplémentaire suivante consistant à :
V42 : mettre en marche la pompe (9) et démarrer le fonctionnement régulé de la pompe.

3. Procédé selon l'une quelconque des revendications 1 et 2, dans lequel l'installation hydroélectrique comprend des commutateurs et des lignes qui sont disposés de telle sorte que la machine synchrone (5) est reliée directement au transformateur de réseau (7) dans un premier état de commutation, et est reliée au transformateur de réseau (7) par le convertisseur de fréquence (6) dans un deuxième état de commutation, et l'installation hydroélectrique se trouve dans le premier état de commutation aux étapes suivantes : V1, V2, V32, à l'état du fonctionnement régulé de la turbine, V42 à l'état du fonctionnement régulé de la pompe ; et l'installation hydroélectrique se trouve dans le deuxième état de commutation aux étapes V31 et V41.

4. Procédé selon l'une quelconque des revendications 1 à 3, dans lequel la machine synchrone (5) est accélérée par le convertisseur de fréquence (6) à l'étape V41.

5. Procédé selon l'une quelconque des revendications 1 à 4, dans lequel la machine synchrone (5) est freinée jusqu'à 50 % du régime nominal à l'étape V31.

6. Procédé selon l'une quelconque des revendications 1, 2, 3 ou 5 en relation avec la revendication 4, la machine synchrone (5) étant accélérée jusqu'à 120 % du régime nominal à l'étape V41.

7. Procédé selon l'une quelconque des revendications 3 à 6 en relation avec la revendication 2, dans lequel la pompe (9) comprend un entraînement à vitesse de rotation variable, et le fonctionnement régulé de la pompe est régulé à l'étape V42 par l'entraînement de pompe à vitesse de rotation variable.

8. Procédé selon l'une quelconque des revendications 3 à 6 en relation avec la revendication 2, dans lequel la pompe (9) comprend un entraînement à vitesse de rotation constante, et à l'étape V42, le dispositif directeur de la turbine (4) est ouvert, et le fonctionnement régulé de la pompe est régulé à l'étape V42 par le dispositif directeur de la turbine (4), la turbine (4) et la pompe (9) se trouvant en court-circuit hydraulique.
